# EUROPEAN PATENT APPLICATION

(11) **EP 3 680 257 A1**
(43) Date of publication of application: **15.07.2020**
(21) Application number: 18850759.4
(22) Date of filing: 03.09.2018
(51) Int. Cl.: C08F 4/00, C08F 297/00, C08G 64/02

(54) **NOVEL MACROINITIATOR, PRODUCTION METHOD THEREOF AND METHOD FOR PRODUCING BLOCK COPOLYMER**

(30) Priority: 04.09.2017 JP 2017169870
(71) Applicant: National University Corporation Tokyo University of Agriculture and Technology, Tokyo 183-8538 (JP); Sumitomo Seika Chemicals Co., Ltd., Kako-gun, Hyogo 675-0145 (JP)
(72) Inventor: NAKANO, Koji, Fuchu-shi Tokyo 183-8538 (JP); NISHIOKA, Kiyoshi, Himeji-shi Hyogo 672-8076 (JP)
(74) Representative: Vossius & Partner Patentanwälte Rechtsanwälte mbB
(86) International application number: PCT/JP2018/032543
(87) International publication number: WO 2019/045093

(57) **Abstract**

Provided is an aliphatic polycarbonate applicable to the production of a block copolymer by radical polymerization. The aliphatic polycarbonate is represented by formula (1): 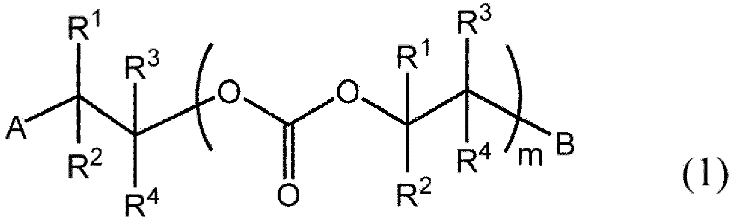 wherein R¹, R², R³, and R⁴ are identical or different, and each represents a hydrogen atom, a substituted or unsubstituted alkyl group having 1 to 15 carbon atoms, or a substituted or unsubstituted aryl group having 6 to 20 carbon atoms; A and B are identical or different, and each represents a substituent that serves as an initiating group for living radical polymerization, a hydroxy group, an alkoxy group, an acyloxy group, or a carboxy group, provided that at least one of A and B is a substituent that serves as an initiating group for living radical polymerization; and m is an integer of 10 to 2500.

## Description

### Technical Field

The present invention relates to a novel macroinitiator; a method for producing the macroinitiator; a method for producing a block copolymer using the macroinitiator; and the like.

### Background Art

A block copolymer is a polymer in which two or more types of polymers are directly bonded. Since block copolymers have various functions derived from their particular structure, they have been actively studied for various applications. For example, Patent Literature (PTL) 1 discloses an example in which a block copolymer is used as a compatibilizer for a polymer blend. Patent Literature (PLT) 2 discloses a lithography technique utilizing self-assembly of a block copolymer.

As methods for producing a block copolymer, the living polymerization method, the macroinitiator method, a combination method thereof, and the like, are generally used. The living polymerization method for producing a block copolymer is a method comprising polymerizing a first monomer and then polymerizing a second monomer without isolating the obtained first polymer, to thereby produce a block copolymer. Therefore, there is a limitation such that unless the monomers used can be polymerized by the same polymerization mechanism, the application of the living polymerization method is difficult. However, the living polymerization method can precisely design the molecular weight of each segment and the composition ratio, and thus has been used to produce various high-performance resins. The macroinitiator method is a method for producing a block polymer, comprising preparing a polymer (hereinafter also referred to as prepolymer) from a first monomer beforehand, and then allowing the polymerization of a second monomer to start from a terminal group of the first polymer. Therefore, although it is necessary to prepare beforehand a prepolymer having an appropriate terminal functional group in accordance with the polymerization mechanism of the second monomer, the macroinitiator method can produce a block copolymer comprising polymers whose polymerization mechanisms are different. Although there is a problem in that the operation becomes complicated, a combination of the living polymerization method and the macroinitiator method can precisely design and manufacture various block copolymers.

When an aliphatic polycarbonate is produced by polymerizing carbon dioxide and epoxide, the polymerization is known to proceed by coordinated anionic polymerization, and the coordinated anionic polymerization is known to proceed by living polymerization. As examples of methods for producing a block copolymer of an aliphatic polycarbonate by living polymerization, Patent Literature (PLT) 3 discloses a method for producing a polycarbonate-polyester block copolymer, comprising copolymerizing carbon dioxide and epoxide, and then copolymerizing the epoxide and cyclic anhydride; and Patent Literature (PTL) 4 discloses a method for producing a polycarbonate-polylactone block copolymer, comprising copolymerizing carbon dioxide and epoxide, and then subjecting lactone to ring-opening polymerization. Further, as an example of a method for producing a block copolymer by the macroinitiator method, Patent Literature (PTL) 5 discloses a method for producing a block copolymer, comprising preparing polyethylene glycol, polystyrene, polyethylene, polymethyl methacrylate, or the like having a hydroxy group at an end thereof, and copolymerizing carbon dioxide and epoxide using the terminal hydroxy group as an initiator.

### Citation List

### Patent Literature

PTL 1: JPH9-124779A
PTL 2: JP2015-82011A
PTL 3: JP2008-280399A
PLT 4: JP2016-518502A
PTL 5: JP2013-523988A

### Summary of Invention

### Technical Problem

Methods developed thus far for producing a block copolymer of aliphatic polycarbonate have been limited to anionic polymerization, in terms of polymerization mode. Therefore, it was impossible to produce a block copolymer with a polymer having a substituent having an active hydrogen on its side chain (for example, a carboxy or hydroxy group), and block copolymers that could be produced were severely limited in terms of structure.

The present invention has been made in view of the above problem. An object of the present invention is to provide an aliphatic polycarbonate that is applicable to a wide variety of monomers, and that can be used to produce a block copolymer by radical polymerization.

### Solution to Problem

The present inventors found that when an aliphatic polycarbonate having a specific structure is used as a prepolymer, a block copolymer can be produced by radical polymerization. The inventors conducted further research based on this finding, and accomplished the present invention.

The present invention includes, for example, the subject matter described in the following items.
Item 1. A living radical polymerization initiator comprising an aliphatic polycarbonate.
Item 2. The living radical polymerization initiator according to Item 1, wherein the aliphatic polycarbonate is represented by formula (1): 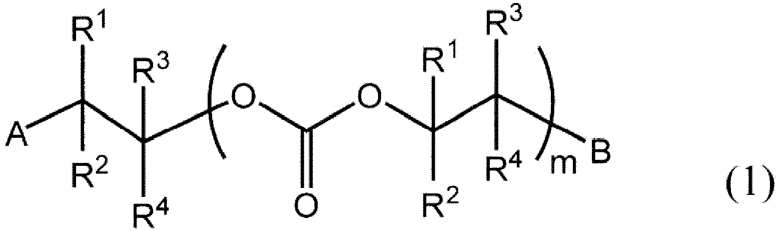
   (wherein R¹, R², R³, and R⁴ are identical or different, and each represents a hydrogen atom, a substituted or unsubstituted alkyl group having 1 to 15 carbon atoms, or a substituted or unsubstituted aryl group having 6 to 20 carbon atoms;
   A and B are identical or different, and each represents a substituent that serves as an initiating group for living radical polymerization, a hydroxy group, an alkoxy group, an acyloxy group, or a carboxy group, provided that at least one of A and B is a substituent that serves as an initiating group for living radical polymerization; and
   m is an integer of 10 to 2500).
Item 3. The living radical polymerization initiator according to Item 1 or 2, wherein the substituent that serves as an initiating group for living radical polymerization is a halogen-containing group, a dithioester group, a dithiocarbonate group, a dithiocarbamate group, a trithiocarbonate group, an aminooxy group, or an organotellurium group.
Item 4. The living radical polymerization initiator according to any one of Items 1 to 3, wherein the substituent that serves as an initiating group for living radical polymerization is
   a group represented by formula (2): 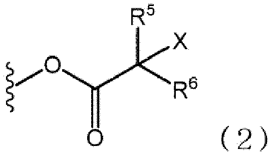
   (wherein R⁵ and R⁶ are identical or different, and each represents a hydrogen atom, an alkyl group having 1 to 10 carbon atoms, or an aryl group having 6 to 20 carbon atoms; and
   X represents a chlorine atom, a bromine atom, or an iodine atom); a group represented by formula (3):

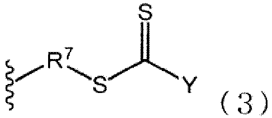

   (wherein R⁷ represents an alkylene group having 1 to 10 carbon atoms, an arylene group having 6 to 20 atoms, or an ester group having 1 to 15 carbon atoms; and
   Y represents an alkyl group having 1 to 10 carbon atoms, an aryl group having 6 to 20 carbon atoms, an alkoxy group having 1 to 10 carbon atoms, an alkylamino group having 1 to 10 carbon atoms, or a thioalkoxy group having 1 to 10 carbon atoms);
   a group represented by formula (4):

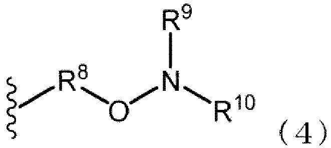

   (wherein R⁸ represents an alkylene group having 1 to 10 carbon atoms, an arylene group having 6 to 20 carbon atoms, or an ester group having 1 to 15 carbon atoms;
   R⁹ and R¹⁰ are identical or different, and each represents a hydrogen atom, an alkyl group having 1 to 10 carbon atoms, or an aryl group having 6 to 20 carbon atoms; or R⁹ and R¹⁰, taken together with the nitrogen atom to which they are bonded, may be bonded to each other to form a substituted or unsubstituted 4- to 10-membered aliphatic nitrogen heterocyclic ring), or
      a group represented by formula (5):

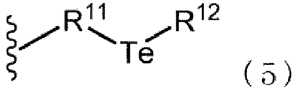

   (wherein R¹¹ represents an alkylene group having 1 to 10 carbon atoms, an arylene group having 6 to 20 carbon atoms, or an ester group having 1 to 15 carbon atoms; and
   R¹² may be a substituted or unsubstituted alkyl group having 1 to 10 carbon atoms, or a substituted or unsubstituted aryl group having 6 to 20 carbon atoms).
Item 5. The living radical polymerization initiator according to any one of Items 1 to 4, wherein the aliphatic polycarbonate has a number average molecular weight of 1000 or more, and 100000 or less.
Item 6. A method for producing a block copolymer, comprising performing a polymerization reaction using the living radical polymerization initiator of any one of Items 1 to 5. Item 7.
   An aliphatic polycarbonate represented by formula (1): 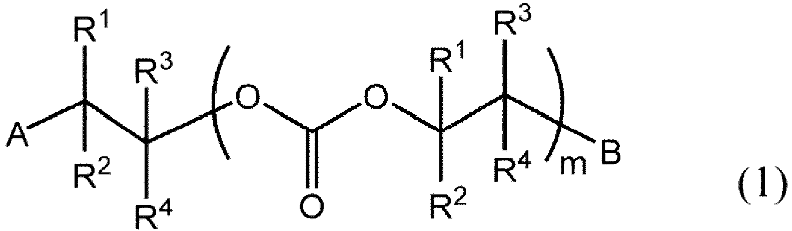
   (wherein R¹, R², R³, and R⁴ are identical or different, and each represents an hydrogen atom, an alkyl group having 1 to 15 carbon atoms, or an aryl group having 6 to 20 carbon atoms; A and B are identical or different, and each represents a substituent that serves as an initiating group for living radical polymerization, a hydroxy group, an alkoxy group, an acyloxy group, or a carboxy group, provided that at least one of A and B is a substituent that serves as an initiating group for living radical polymerization; and
   m is an integer of 10 to 2500).
Item 8. The aliphatic polycarbonate according to Item 7, wherein the substituent that serves as an initiating group for living radical polymerization is a halogen-containing group, a dithioester group, a dithiocarbonate group, a dithiocarbamate group, a trithiocarbonate group, an aminooxy group, or an organotellurium group.
Item 9. The aliphatic polycarbonate according to Item 7 or 8, wherein the substituent that serves as an initiating group for living radical polymerization is
   a group represented by formula (2): 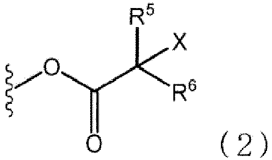
   (wherein R⁵ and R⁶ are identical or different, and each represents a hydrogen atom, an alkyl group having 1 to 10 carbon atoms, or an aryl group having 6 to 20 carbon atoms; and
   X represents a chlorine atom, a bromine atom, or an iodine atom);
      a group represented by formula (3):

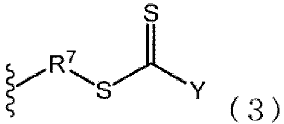

   (wherein R⁷ represents an alkylene group having 1 to 10 carbon atoms, an arylene group having 6 to 20 carbon atoms, or an ester group having 1 to 15 carbon atoms; and
   Y is an alkyl group having 1 to 10 carbon atoms, an aryl group having 6 to 20 carbon atoms, an alkoxy group having 1 to 10 carbon atoms, an alkylamino group having 1 to 10 carbon atoms, or a thioalkoxy group having 1 to 10 carbon atoms);
      a group represented by formula (4):

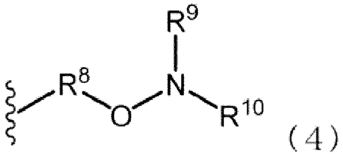

   (wherein R⁸ represents an alkylene group having 1 to 10 carbon atoms, an arylene group having 6 to 20 carbon atoms, or an ester group having 1 to 15 carbon atoms; and
   R⁹ and R¹⁰ are identical or different, and each represents a hydrogen atom, an alkyl group having 1 to 10 carbon atoms, or an aryl group having 6 to 20 carbon atoms; or R⁹ and R¹⁰, taken together with the nitrogen atom to which they are bonded, may be bonded to each other to form a substituted or unsubstituted 4- to 10-membered aliphatic nitrogen heterocyclic ring), or
      a group represented by formula (5):

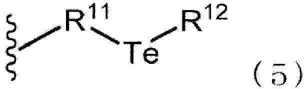

   (wherein R¹¹ represents an alkylene group having 1 to 10 carbon atoms, an arylene group having 6 to 20 carbon atoms, or an ester group having 1 to 15 carbon atoms; and
   R¹² represents a substituted or unsubstituted alkyl group having 1 to 10 carbon atoms, or a substituted or unsubstituted aryl group having 6 to 20 carbon atoms).
Item 10. The aliphatic polycarbonate according to any one of Item 7 to 9, which has a number average molecular weight of 1000 or more, and 100000 or less.

### Advantageous Effects of Invention

The aliphatic polycarbonate according to the present invention can be used as a macroinitiator for living radical polymerization. This enables production of a block copolymer that has been difficult to produce.

### Brief Description of Drawings

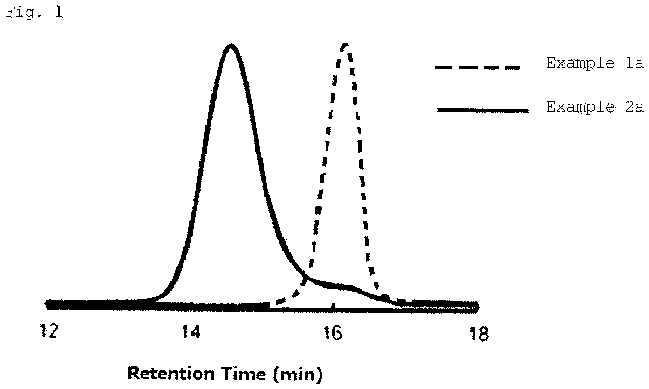

Fig. 1 shows an HPLC chromatogram (GPC curve) of a block copolymer obtained in an Example (Example 2a), and that of its starting material aliphatic polycarbonate (Example 1a).

### Description of Embodiments

Embodiments of the present invention are described in more detail below.

Aliphatic polycarbonates included in the present invention (hereinafter sometimes referred to as "the aliphatic polycarbonate of the present invention") are represented by formula (1): 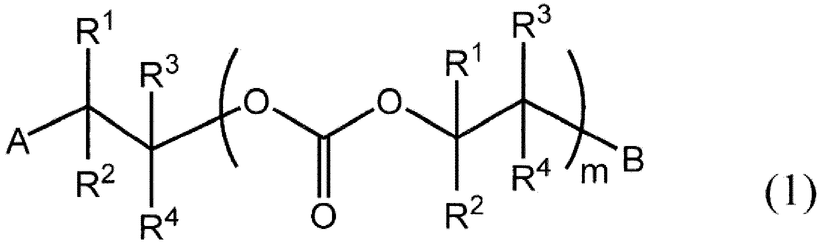 (wherein R¹, R², R³, and R⁴ are identical or different, and each represents a hydrogen atom, a substituted or unsubstituted alkyl group having 1 to 15 carbon atoms, or a substituted or unsubstituted aryl group having 6 to 20 carbon atoms; at least one of A and B is a substituent that serves as an initiating group for living radical polymerization; and m is an integer of 10 to 2500).

At least one of the terminal groups A and B of the aliphatic polycarbonate of the present invention has a substituent that serves as an initiating group for living radical polymerization. Living radical polymerization that starts from the substituent can produce a block copolymer. When A or B is not a substituent that serves as an initiating group for living radical polymerization, the A or B is, for example, a hydroxy group, an alkoxy group, an acyloxy group, or a carboxy group. Among these, a hydroxy group is preferable. Examples of the alkoxy group include methoxy, ethoxy, isopropoxy, tert-butoxy, and the like. Examples of the acyloxy group include acetoxy, propionyloxy, butyryloxy, isobutyryloxy, pivaloyloxy, benzoyloxy, and the like.

In the present specification, the alkyl group having 1 to 15 carbon atoms refers to a linear or branched alkyl group having 1, 2, 3, 4, 5, 6, 7, 8, 9, 10, 11, 12, 13, 14, or 15 carbon atoms. The number of carbon atoms is preferably 1 to 10, more preferably 1 to 8, even more preferably 1 to 6, and still even more preferably 1 to 4. In the present specification, the alkyl group having 1 to 10 carbon atoms refers to a linear or branched alkyl group having 1 to 10 (1, 2, 3, 4, 5, 6, 7, 8, 9, or 10) carbon atoms. The number of carbon atoms is preferably 1 to 9, more preferably 1 to 8, even more preferably 1 to 6, and still even more preferably 1 to 4. Specific examples of the alkyl group include methyl, ethyl, n-propyl, isopropyl, n-butyl, sec-butyl, tert-butyl, n-pentyl, n-hexyl, n-heptyl, n-octyl, n-nonyl, n-decyl, and the like.

The alkyl group represented by R¹, R², R³, or R⁴ may be substituted with substituent(s). In the present specification, examples of substituents of the alkyl group include alkoxy, acyloxy, silyl, sulfanyl, cyano, nitro, sulfo, formyl, aryl, and the like. In the substituted alkyl group as referred to herein, the number of substituents may be one or more. Examples of the alkoxy group include methoxy, ethoxy, isopropoxy, tert-butoxy, and the like. Examples of the acyloxy group include acetoxy, propionyloxy, butyryloxy isobutyryloxy, pivaloyloxy, benzoyloxy, and the like. Examples of the silyl group include trimethylsilyl, triethylsilyl, triisopropylsilyl, trimethoxysilyl, dimethoxymethylsilyl, methoxydimethylsilyl, and the like. Examples of the aryl group include phenyl, o-tolyl, m-tolyl, p-tolyl, naphthyl, indenyl, and the like.

In the present specification, the alkylene group having 1 to 10 carbon atoms refers to a linear or branched alkylene group having 1, 2, 3, 4, 5, 6, 7, 8, 9, or 10 carbon atoms. The number of carbon atoms is preferably 1 to 9, more preferably 1 to 8, even more preferably 1 to 6, and still even more preferably 1 to 4. Specific examples of the alkylene group include methylene, ethylene, n-propylene, isopropylene, n-butylene, sec-butylene, tert-butylene, n-pentylene, n-hexylene, n-heptylene, n-octylene, n-nonylene, n-decylene, and the like.

In the present specification, the aryl group having 6 to 20 (6, 7, 8, 9, 10, 11, 12, 13, 14, 15, 16, 17, 18, 19, or 20) carbon atoms is preferably an aryl group having 6 to 14 carbon atoms. Specific examples of the aryl group include phenyl, indenyl, naphthyl, tetrahydronaphthyl, and the like.

The aryl group represented by R¹, R², R³, or R⁴ may be substituted with substituent(s). Accordingly, examples of the aryl group represented by R¹, R², R³, or R⁴ include o-tolyl, m-tolyl, p-tolyl, and the like. More specifically, examples of substituents of the aryl group referred to herein include alkyl, aryl, alkoxy, acyloxy, silyl, sulfanyl, cyano, nitro, sulfur, formyl, and the like. In the substituted aryl group as referred to herein, the number of substituents may be one or more. Examples of the alkyl group referred to herein include methyl, ethyl, n-propyl, isopropyl, n-butyl, sec-butyl, tert-butyl, and the like. Examples of the aryl group include phenyl, o-tolyl, m-tolyl, p-tolyl, naphthyl, indenyl, and the like. Examples of the alkoxy group include methoxy, ethoxy, isopropoxy, tert-butoxy, and the like. Examples of the acyloxy group include acetoxy, propionyloxy, butyryloxy, isobutyryloxy, pivaloyloxy, benzoyloxy, and the like. Examples of the silyl group include trimethylsilyl, triethylsilyl, triisopropylsilyl, trimethoxysilyl, dimethoxymethylsilyl, methoxydimethylsilyl, and the like.

In the present specification, the arylene group having 6 to 20 (6, 7, 8, 9, 10, 11, 12, 13, 14, 15, 16, 17, 18, 19 or 20) carbon atoms is preferably an arylene group having 6 to 14 carbon atoms. Specific examples of the arylene group include phenylene (in particular, p-phenylene), indenylene, naphthylene (in particular, 2,6-naphthylene), tetrahydronaphthylene, and the like.

R¹, R², R³, and R⁴ are identical or different; and preferable examples of R¹, R², R³, and R⁴ include, but are not limited to, a hydrogen atom and alkyl groups having 1 to 4 carbon atoms. It is particularly preferable that R¹, R², and R³ are a hydrogen atom, and that R⁴ is an alkyl group having 1 to 4 carbon atoms (particularly methyl).

Examples of the substituent that serves as an initiating group for living radical polymerization include, but are not limited to, a halogen-containing group, a dithioester group, a dithiocarbonate group, a dithiocarbamate group, a trithiocarbonate group, an alkoxyamine group, an organotellurium group, and the like.

Specific examples of the substituent that serves as an initiating group for living radical polymerization include a group represented by formula (2): 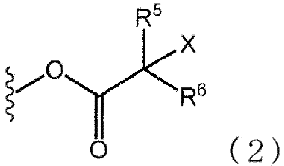 (wherein R⁵ and R⁶ are identical or different, and each represents a hydrogen atom, an alkyl group having 1 to 10 carbon atoms, or an aryl group having 6 to 20 carbon atoms; and X represents a chlorine atom, a bromine atom, or an iodine atom);
a group represented by formula (3): 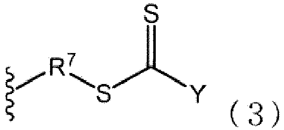 (wherein R⁷ represents an alkylene group having 1 to 10 carbon atoms, an arylene group having 6 to 20 carbon atoms, or an ester group having 1 to 15 carbon atoms; and Y represents an alkyl group having 1 to 10 carbon atoms, an aryl group having 6 to 20 carbon atoms, an alkoxy group having 1 to 10 carbon atoms, an alkylamino group having 1 to 10 carbon atoms, or a thioalkoxy group having 1 to 10 carbon atoms); or
a group represented by formula (4): 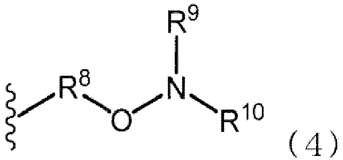
(wherein R⁸ represents an alkylene group having 1 to 10 carbon atoms, an arylene group having 6 to 20 carbon atoms, or an ester group having 1 to 15 carbon atoms;
and R⁹ and R¹⁰ are identical or different, and each represents a hydrogen atom, an alkyl group having 1 to 10 carbon atoms, or an aryl group having 6 to 20 carbon atoms; or R⁹ and R¹⁰, taken together with the nitrogen atom to which they are bonded, may be bonded to each other to form a substituted or unsubstituted 4- to 10-membered aliphatic nitrogen heterocyclic ring), or
   a group represented by formula (5):

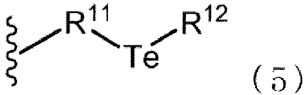

(wherein R¹¹ represents an alkylene group having 1 to 10 carbon atoms, an arylene group having 6 to 20 carbon atoms, or an ester group having 1 to 15 carbon atoms; and
R¹² represents a substituted or unsubstituted alkyl group having 1 to 10 carbon atoms, or a substituted or unsubstituted aryl group having 6 to 20 carbon atoms).

In the present specification, the ester group having 1 to 15 carbon atoms refers to a linear or branched ester group having 1, 2, 3, 4, 5, 6, 7, 8, 9, 10, 11, 12, 13, 14, or 15 carbon atoms. The number of carbon atoms is preferably 2 to 13, more preferably 2 to 11, and even more preferably 2 to 10. Specific examples of preferable ester groups include -OCO-, -OCOCH₂-, -OCOCH₂CH₂-, -OCOC₆H₅-, -OCOCH₂C₆H₅-, -OCOCH₂C₆H₅CH₂-, -OCOCH₂C₆H₅CH(CH₃)-, -CH₂COOCH₂-, -CH₂OCOCH₂-, and the like.

In the present specification, the alkoxy group having 1 to 10 carbon atoms refers to a linear or branched alkoxy group having 1, 2, 3, 4, 5, 6, 7, 8, 9, or 10 carbon atoms. The number of carbon atoms is preferably 1 to 9, more preferably 1 to 8, even more preferably 1 to 6, and still even more preferably 1 to 4. Specific examples of preferable alkoxy groups includes -OCH₃, -OCH₂CH₃, -OCH₂CH₂CH₃, -OCH(CH₃)CH₃, -OCH₂CH₂CH₂CH₃, -OCH₂CH(CH₃)CH₃, -OCH(CH₃) CH₂CH₃, -OCH₂CH₂CH₂CH₂CH₃, -OCH₂CH₂CH(CH₃)CH₃, -OCH₂CH(CH₃)CH₂CH₃, -OCH(CH₃)CH₂CH₂CH₃, and the like.

In the present specification, the alkylamino group having 1 to 10 carbon atoms refers to a linear or branched alkyl amino group having 1, 2, 3, 4, 5, 6, 7, 8, 9, or 10 carbon atoms. The number of carbon atoms is preferably 1 to 9, more preferably 1 to 8, even more preferably 1 to 6, and still even more preferably 1 to 4. Specific examples of preferable alkylamino groups include -NHCH₃, -NHCH₂CH₃, -NHCH₂CH₂CH₃, -NHCH(CH₃)₂, -NHCH₂CH₂CH₂CH₃, -NHCH₂CH(CH₃)CH₃, -NHCH(CH₃)CH₂CH₃, -NHCH₂CH₂CH₂CH₂CH₃, -NHCH₂CH₂CH(CH₃)₂, -NHCH₂CH(CH₃)CH₂CH₃, -NHCH(CH₃)CH₂CH₂CH₃, -N(CH₃)₂, -N(CH₂CH₃)₂, and the like.

In the present specification, the thioalkoxy group having 1 to 10 carbon atoms refers to a linear or branched thioalkoxy group having 1, 2, 3, 4, 5, 6, 7, 8, 9, or 10 carbon atoms. The number of carbon atoms is preferably 1 to 9, more preferably 1 to 8, even more preferably 1 to 6, and still even more preferably 1 to 4. Specific examples of preferable thioalkoxy groups include -SCH₃, -SCH₂CH₃, -SCH₂CH₂CH₃, -SCH₂CH₂CH₂CH₃, -SCH₂CH(CH₃)₂, -SCH(CH₃)CH₂CH₃, -SCH₂CH₂CH₂CH₂CH₃, -SCH₂CH₂CH(CH₃)₂, -SCH₂CH(CH₃)CH₂CH₃, -SCH(CH₃)CH₂CH₂CH₃, and the like.

R⁹ and R¹⁰, taken together with the nitrogen atom to which they are bonded, may be bonded to each other to form a 4-to 10-membered (4-, 5-, 6-, 7-, 8-, 9-, or 10-membered) aliphatic nitrogen heterocycle. The nitrogen atom of the aliphatic nitrogen heterocycle is derived from the nitrogen atom to which R⁹ and R¹⁰ are bonded. The aliphatic nitrogen heterocycle may be saturated or unsaturated. Further, the aliphatic nitrogen heterocycle may be substituted with substituent(s). Examples of substituents include alkyl, aryl, alkoxy, acyloxy, silyl, sulfanyl, cyano, nitro, sulfo, formyl, and the like. The aliphatic nitrogen heterocycle may be substituted with one or more substituents. Examples of the alkyl group include methyl, ethyl, n-propyl, isopropyl, n-butyl, sec-butyl, tert-butyl, and the like. Examples of the aryl group include phenyl, o-tolyl, m-tolyl, p-tolyl, naphthyl, indenyl, and the like. Examples of the alkoxy group include methoxy, ethoxy, isopropoxy, tert-butoxy, and the like. Examples of the acyloxy group include acetoxy, propionyloxy, butyryloxy, isobutyryloxy, pivaloyloxy, benzoyloxy, and the like. Examples of the silyl group include trimethylsilyl, triethylsilyl, triisopropylsilyl, trimethoxysilyl, dimethoxymethylsilyl, methoxydimethylsilyl, and the like.

M is from 10 to 2500, preferably from 10 to 1000, more preferably from 20 to 500, even more preferably from 30 to 250, and still even more preferably from 50 to 100. M is preferably a natural number (a positive integer).

The method for producing an aliphatic hydrocarbon of the present invention may be, for example, a method comprising a step of subjecting epoxide and carbon dioxide to a polymerization reaction. The polymerization reaction is preferably performed in the presence of a metal catalyst. When the polymerization reaction is performed using a catalyst (including a co-catalyst) or an initiator (including a chain transfer agent) having a substituent that serves as an initiating group for living radical polymerization, an aliphatic polycarbonate having a substituent that serves as an initiating agent at an end thereof can be obtained. After the polymerization reaction, a step of introducing a substituent that serves as an initiating group for living radical polymerization may be included in the method. When the production method includes this step, an aliphatic polycarbonate having, at both ends, a substituent that serves as an initiating group for living radical polymerization can be obtained.

Examples of epoxides that can be used to produce the aliphatic polycarbonate of the present invention include ethylene oxide, propylene oxide, 1-butene oxide, 2-butene oxide, isobutylene oxide, 1-pentene oxide, 2-pentene oxide, 1-hexane oxide, 1-octene oxide, 1-dodecene oxide, cyclopentene oxide, cyclohexene oxide, styrene oxide, vinylcyclohexane oxide, 3-phenylpropylene oxide, 3-naphthylpropylene oxide, 3-phenoxypropylene oxide, 3-naphthoxypropylene oxide, and the like. Among these, ethylene oxide, propylene oxide, 1-butene oxide, and cyclohexene oxide are preferable from the viewpoint of high reactivity. Ethylene oxide and propylene oxide are more preferable.

The method for introducing a substituent that serves as an initiating group for living radical polymerization represented by A or B includes a method of introducing into a catalyst (including a co-catalyst) a structure having a substituent that serves as an initiating group for living radical polymerization; a method using a chain transfer agent containing a structure having a substituent that serves as an initiating group for living radical polymerization; a method comprising producing an aliphatic polycarbonate, and then introducing to an end thereof a structure having a substituent that serves as an initiating group for living radical polymerization; and the like. These introduction methods can be performed singly, or in a combination of two or more.

Examples of metal catalysts include zinc-based catalysts, magnesium-based catalysts, aluminum-based catalysts, chromium-based catalysts, cobalt-based catalysts, nickel-based catalysts, and the like. Among these, zinc-based catalysts and cobalt-based catalysts are preferable because they have high polymerization activity in the polymerization reaction of epoxide and carbon dioxide. Cobalt-based catalysts are more preferable from the viewpoint of ease of designing block copolymerization.

Examples of zinc-based catalysts include organozinc catalysts, such as zinc acetate, diethyl zinc, and dibutyl zinc; organozinc catalysts obtained by reacting a zinc compound with a compound, such as primary amine, divalent phenol (benzenediol), aromatic dicarboxylic acid, aromatic hydroxy acid, aliphatic dicarboxylic acid, or aliphatic monocarboxylic acid; and the like. Among these organozinc catalysts, organozinc catalysts obtained by reacting a zinc compound, an aliphatic dicarboxylic acid, and an aliphatic monocarboxylic acid are preferable because they have higher polymerization activity. Organozinc catalysts obtained by reacting zinc oxide, glutaric acid, and acetic acid are more preferable.

Examples of the cobalt-based catalyst include a cobalt complex represented by formula (6): 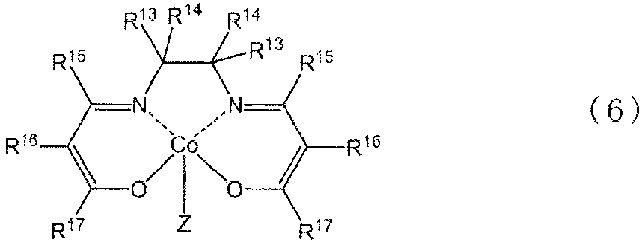
(wherein R¹³ and R¹⁴ are identical or different, and each represents a hydrogen atom, a substituted or unsubstituted alkyl group, a substituted or unsubstituted aromatic group, or a substituted or unsubstituted aromatic group; or two R¹³ or two R¹⁴ may bind to each other to form a substituted or unsubstituted saturated or unsaturated aliphatic ring;
R¹⁵, R¹⁶, and R¹⁷ are identical or different, and each represents a hydrogen atom, a substituted or unsubstituted alkyl group, a substituted or unsubstituted alkenyl group, a substituted or unsubstituted aromatic group, a substituted or unsubstituted aromatic heterocyclic group, a substituted or unsubstituted alkoxy group, a substituted or unsubstituted acyl group, a substituted or unsubstituted alkoxycarbonyl group, a substituted or unsubstituted aromatic oxycarbonyl group, or a substituted or unsubstituted aralkyloxycarbonyl group; or R¹⁶ and R¹⁷ that are present on adjacent carbon atoms may be bonded to each other to form a substituted or unsubstituted aliphatic ring or a substituted or unsubstituted aromatic ring; and Z represents an anionic ligand selected from the group consisting of aliphatic carboxylate, aromatic carboxylate, alkoxide, and aromatic oxide, each having a functional group that serves as an initiating group for living polymerization).

Among the cobalt complexes represented by formula (6), cobalt complexes represented by formula (7) are preferable: 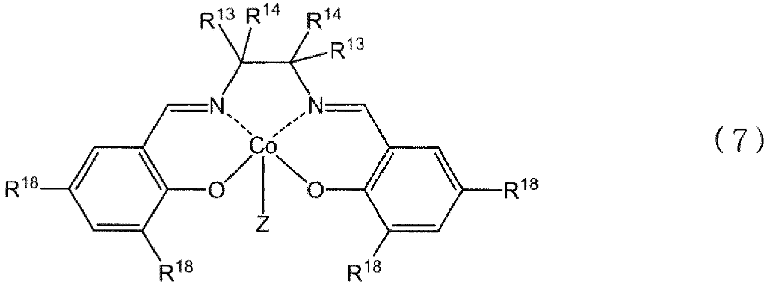
(wherein R¹³ and R¹⁴ are identical or different, and each represents a hydrogen atom, a substituted or unsubstituted alkyl group, a substituted or unsubstituted aromatic group, or a substituted or unsubstituted aromatic heterocyclic group; or two R¹³ or two R¹⁴ may bind to each other to form a substituted or unsubstituted, saturated or unsaturated aliphatic ring; a plurality of R¹⁸ independently represent a hydrogen atom, an alkyl group having 1 to 6 carbon atoms, an alkoxy group having 1 to 6 carbon atoms, a substituted or unsubstituted aromatic group, or a halogen atom; and
Z represents an anionic ligand selected from the group consisting of aliphatic carboxylate, aromatic carboxylate, alkoxide, and aromatic oxide, each having a functional group that serves as an initiating group for living polymerization).

Among the cobalt complexes represented by formula (7), specific examples of preferable complexes include cobalt complexes represented by the following formulas (7-1) to (7-5).

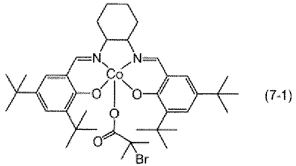

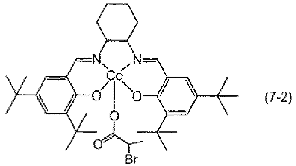

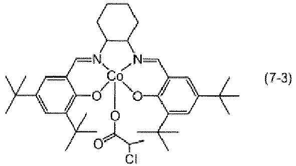

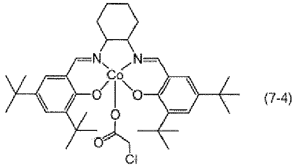

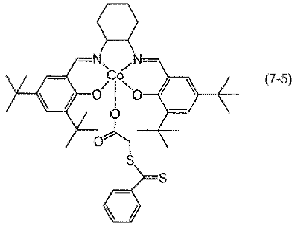

From the viewpoint of promoting the progress of the polymerization reaction, the amount of metal catalyst to be used in the polymerization reaction is preferably 0.001 parts by mass or more, more preferably 0.01 parts by mass or more, based on 100 parts by mass of epoxide. From the viewpoint of obtaining an effect commensurate with the amount used, the amount of metal catalyst to be used is preferably 20 parts by mass or less, more preferably 10 parts by mass or less, based on 100 parts by mass of epoxide.

The polymerization reaction may be performed in the presence of a co-catalyst, in addition to a metal catalyst, if necessary. As with the catalyst described above, the co-catalyst to be used also preferably has introduced therein a structure containing a substituent that serves as an initiating group for living radical polymerization.

Examples of preferable co-catalysts include organic onium salts wherein the cation is bis(triphenylphosphoranylidene)ammonium (PPN) cation, quaternary ammonium cation, quaternary phosphonium cation, pyridinium cation, or the like; and the anion has a structure in which a substituent that serves as an initiating group for living radical polymerization is introduced. Organic onium salts wherein the cation is (triphenylphosphoranylidene)ammonium (PPN) cation are more preferable. Examples include bis(triphenylphosphoranylidene)ammonium 2-bromo-2-propionate, bis(triphenylphosphoranylidene)ammonium 1-chloropropionate, bis(triphenylphosphoranylidene)ammonium 1-bromopropionate, bis(triphenylphosphoranylidene)ammonium chloroacetate, bis(triphenylphosphoranylidene)ammonium chloride, bis(triphenylphosphoranylidene)ammonium dithiobenzoate, bis(triphenylphosphoranylidene)ammonium 2-(thiobenzoylthio)acetate, bis(triphenylphosphoranylidene)ammonium 1-pyrrolecarbodithioate, bis(triphenylphosphoranylidene)ammonium dodecyltrithiocarbonate, bis(triphenylphosphoranylidene)ammonium 3-[(2,2,6,6-tetramethyl-1-piperidinyl)oxy]propionate, bis(triphenylphosphoranylidene)ammonium 2-phenyltellanylpropionate, and the like.

The amount of co-catalyst to be used is preferably 0.1 to 10 moles, more preferably 0.3 to 5 moles, and even more preferably 0.5 to 1.5 moles, per mole of the metal catalyst. An amount of less than 0.1 moles or more than 10 moles is more likely to cause a side reaction in the polymerization reaction.

The polymerization reaction may be performed in the presence of a chain transfer agent. Examples of the chain transfer agent include the above-mentioned alcohols, carboxylic acids, and the like that have a structure containing a substituent that serves as an initiating group for living radical polymerization. Examples of alcohols include 2-chloroethanol, 2-bromoethanol, 2-(thiobenzoylthio)propanol, 4-cyano-4-(phenylthiocarbonylthio)pentanol, 1-hydroxy-2,2,6,6-tetramethylpiperidine, N,N-di-tert-butylhydroxyamine, 1-hydroxy-4-(methyltellanyl-methyl)benzene, 1-hydroxy-4-(1-methyltellanyl-ethyl)benzene, and the like. Examples of carboxylic acid include chloroacetic acid, bromoacetic acid, 2-chloropropionic acid, 2-bromopropionic acid, 2-bromo-2-methylpropionic acid, 2-(thiobenzoylthio)acetic acid, 2-(thiobenzoylthio)propionic acid, 4-cyano-4-(phenylthiocarbonylthio)pentanoic acid, 4-cyano-4-[(dodecylsulfanylthiocarbonyl)sulfanyl]pentanoic acid, 2-(dodecylthiocarbonothioylthio)-2-methylpropionic acid, 3-[(2,2,6,6-tetramethyl-1-piperidinyl)oxy]propionic acid, α-[[(2,2,6-6-tetramethyl-1-piperidinyl)oxy]methyl]benzoic acid, 2-methyltellanyl-acetic acid, 2-phenyltellanyl-propionic acid, and the like.

The amount of chain transfer agent to be used is preferably 5 to 1000 moles, more preferably 10 to 500 moles, and even more preferably 15 to 100 moles, per mole of the metal catalyst. When the amount of chain transfer agent is less than 5 moles, the effect as a chain transfer agent is small. When the amount exceeds 1000 moles, the polymerization reaction may be hindered.

In the polymerization reaction, a solvent may be used as necessary. The solvent is not particularly limited, and various organic solvents can be used. Examples of organic solvents include aliphatic hydrocarbon solvents such as pentane, hexane, octane, and cyclohexane; aromatic hydrocarbon solvents such as benzene, toluene, and xylene; halogenated hydrocarbon solvents such as methylene chloride, chloroform, carbon tetrachloride, 1,1-dichloroethane, 1,2-dichloroethane, chlorbenzene, and bromobenzene; ether solvents such as dimethoxyethane, tetrahydrofuran, 2-methyl tetrahydrofuran, 1,4-dioxane, 1,3-dioxolane, and anisole; ester solvents such as ethyl acetate, n-propyl acetate, and isopropyl acetate; amide solvents such as N,N-dimethylformamide and N,N-dimethylacetamide; carbonate solvents such as dimethyl carbonate, ethyl methyl carbonate, diethyl carbonate, and propylene carbonate; and the like.

The amount of solvent to be used is preferably, for example, 100 to 10,000 parts by mass, based on 100 parts by mass of the epoxide, to allow the reaction to smoothly proceed.

Examples of the method for subjecting epoxide and carbon dioxide to a polymerization reaction in the presence of a metal catalyst include, but are not particularly limited to, a method comprising placing epoxide, a metal catalyst, and optionally a co-catalyst, a reaction solvent, and the like in an autoclave, and mixing; and then pressurizing the autoclave with carbon dioxide to allow a reaction to proceed.

The amount of carbon dioxide to be used in the polymerization reaction is preferably 1 to 10 moles, more preferably 1 to 5 moles, and even more preferably 1 to 3 moles, per mole of the epoxide.

The pressure of carbon dioxide applied in the polymerization reaction is not particularly limited. From the viewpoint of allowing the reaction to smoothly proceed, the pressure is preferably 0.1 MPa or more, more preferably 0.2 MPa or more, and even more preferably 0.5 MPa or more. From the viewpoint of obtaining an effect commensurate with the pressure applied, the pressure is preferably 20 MPa or less, more preferably 10 MPa or less, and even more preferably 5 MPa or less.

The polymerization reaction temperature in the polymerization reaction is not particularly limited. From the viewpoint of shortening the reaction time, the reaction temperature is preferably 0°C or higher, more preferably 10°C or higher, and even more preferably 20°C or higher. From the viewpoint of suppressing side reactions and increasing yields, the reaction temperature is preferably 100°C or lower, more preferably 90°C or lower, and even more preferably 80°C or lower.

The polymerization reaction time varies depending upon the polymerization reaction conditions, and thus cannot be generalized. It is usually preferable that the reaction time is about 1 to 40 hours.

After the polymerization reaction, the terminal group(s) may be modified as described above. In this case, when a free radical (e.g., a hydroxyl, alkoxy, acyloxy, or carboxy group) at an end of the polymer chain is modified with a modifier having a structure containing a substituent that serves as an initiating group for living radical polymerization, the structure containing a substituent that serves as an initiation group for living radical polymerization can be introduced into a terminal group. Examples of the modifier having a structure containing a substituent that serves as an initiating group for living radical polymerization and that is represented by A or B include chloroacetic anhydride, bromoacetic anhydride, 2-chloropropionyl chloride, 2-bromopropionyl bromide, 2-bromo-2-methylpropionic anhydride, 2-(thiobenzoylthio)acetic anhydride, 2-(thiobenzoylthio)propionic anhydride, 4-cyano-4-(phenylthiocarbonylthio)pentanoic anhydride, 4-cyano-4-[(dodecylsulfanylthiocarbonyl)sulfanyl]pentanoic anhydride, 3-[(2,2,6,6-tetramethyl-1-piperidinyl)oxy]propionic anhydride, α-[[((2,2,6-6-tetramethyl-1-piperidinyl)oxy]methyl]benzoyl chloride, 2-methyltellanyl-acetic anhydride, 2-phenyltellanyl-propionic anhydride, and the like. A combination of the polymerization and the terminal group modification can produce an aliphatic polycarbonate of formula (1) wherein both A and B have a substituent that serves as an initiating group for living radical polymerization.

The aliphatic polycarbonate of the present invention preferably has a number average molecular weight of 1000 to 100,000. From the viewpoint of ease of handling of the block copolymer obtained by the subsequent living radical polymerization, the aliphatic polycarbonate preferably has a number average molecular weight of 3000 or more, more preferably 5000 or more. From the viewpoint of avoiding a decrease of reactivity of the subsequent living radical polymerization reaction, the aliphatic polycarbonate preferably has a number average molecular weight of 50000 or less, more preferably 20000 or less, and even more preferably 10000 or less.

In the aliphatic polycarbonate of the present invention, at least one of the terminal groups of the polymer chain has a substituent that serves as an initiating group for living radical polymerization, as described above. Therefore, a desired block copolymer can be produced by subjecting the aliphatic polycarbonate as a macroinitiator to living radical polymerization.

The living radical polymerization method that can be used varies depending on the type of the substituent that serves as an initiating group for living radical polymerization. For example, when the initiating group is a halogen-containing group, an atom transfer radical polymerization can be used. When the initiating group is a dithioester group, a dithiocarbonate group, a dithiocarbamate group, or a trithiocarbonate group, reversible addition-fragmentation chain transfer polymerization can be used. When the initiating group is an alkoxyamine group, a nitroxide-mediated radical polymerization can be used. When the initiating group is an organotellurium group, an organotellurium-mediated radical polymerization can be used. A block copolymer can be produced by reacting a monomer in an organic solvent using the aliphatic polycarbonate of the present invention as a macroinitiator, if necessary, in the presence of a catalyst or another initiator.

When the atom transfer radical polymerization is used, examples of usable catalysts include metal complexes formed from an organic ligand and a transition metal compound, such as Group 7, Group 8, Group 9, Group 10, or Group 11 transition metal compound; catalysts comprising a compound containing at least one central element selected from phosphorus, nitrogen, carbon, oxygen, germanium, tin, and antimony, and a halogen atom bonded to the central element; amine compounds; catalysts that are nonmetallic compounds having an ionic bond with a halide ion, with a non-metal atom in the nonmetallic compounds being in a cationic state and forming an inonic bond with a halide ion; and the like.

Examples of Group 7, 8, 9, 10, or 11 transition metal compounds include cuprous chloride, cuprous bromide, cuprous iodide, cuprous cyanide, cuprous oxide, ferrous chloride, ferrous bromide, ferrous iodide, iron dichloride, iron dibromide, iron diiodide, ruthenium dichloride, ruthenium dibromide, ruthenium diiodide, and the like.

Examples of organic ligands include 2,2'-bipyridyl, 1,10-phenanthroline, tetramethylethylenediamine, pentamethyldiethylenetriamine, tris(dimethylaminoethyl)amine, tris(2-pyridylmethyl)amine, triphenyl phosphine, tributylphosphine, and the like.

Examples of catalysts having a central element selected from germanium, tin, or antimony includes compounds containing at least one central element selected from germanium, tin, and antimony, and at least one halogen atom bonded to the central element. Examples include germanium iodide (II), germanium iodide (IV), tin iodide (II), tin iodide (IV), and the like.

Examples of catalysts having nitrogen or phosphorus as a central element include compounds containing at least one central element selected from nitrogen and phosphorus, and at least one halogen atom bonded to the central element. Examples include halogenated phosphorus, halogenated phosphine, halogenated nitrogen, halogenated phosphorous acid, halogenated amine, halogenated imide derivatives, and the like.

Examples of organic amine compounds include triethylamine, tributylamine, 1,1,2,2-tetrakis(dimethylamino)ethylene, 1,4,8,11-tetramethyl-1,4,8,11-tetraazacyclotetradecane, ethylenediamine, tetramethylethylenediamine, tetramethyldiaminomethane, tris(2-aminoethyl)amine, tris(2-methylaminoethyl)amine, and the like.

Examples of catalysts that are nonmetallic compounds having an ionic bond with a halide ion, with a non-metal atom in the nonmetallic compounds being in a cationic state and forming an ionic bond with a halide ion, include ammonium salts such as tetrabutylammonium iodide, tetrabutylammonium triiodide, and tetrabutylammonium bromodiiodide; imidazolium salts such as 1-methyl-3-methyl-imidazolium iodide and 1-ethyl-3-methylimidazolium bromide; pyridinium salts such as 2-chloro-1-methylpyridinium iodide; phosphonium salts such as methyltributylphosphonium iodide and tetraphenylphosphonium iodide; sulfonium salts such as tributylsulfonium iodide; iodonium salts such as diphenyliodonium iodide; and the like.

When reversible addition-fragmentation chain transfer polymerization is used, examples of initiators include azo compounds such as 2,2'-azobis(isobutyronitrile), 2,2'-azobis(2,4-dimethylvaleronitrile), 2,2'-azobis(2-methylbutyronitrile), 4,4'-azobis(4-cyanovaleric acid), 2,2'-azobis(2-methylpropionic acid)dimethyl, and 2,2'-azobis(2-methylpropionamidine)dihydrochloride; peroxides such as benzoyl peroxide, di-tert-butyl peroxide, dicumyl peroxide, tert-butyl hydroperoxide, cumene hydroperoxide, and potassium peroxodisulfate; and the like.

When either a nitroxide-mediated radical polymerization or an organotellurium-mediated radical polymerization is used, the use of catalysts and initiators is unnecessary.

The monomer to be used for radical polymerization is not particularly limited, as long as it has a radical reactive unsaturated bond. Examples include styrene monomers such as styrene and α-methylstyrene; acrylic monomers such as acrylic acid, methyl acrylate, tert-butyl acrylate, N,N-dimethylacrylamide, N-isopropylacrylamide, acrylonitrile, and ethyl 2-cyanoacrylate ; methacrylic monomers such as methacrylic acid, methyl methacrylate, butyl methacrylate, and hydroxyethyl methacrylate; vinyl monomers such as vinyl chloride, vinyl fluoride, vinyl acetate, vinylsulfonic acid, ethyl vinyl ether, 2-hydroxyethyl vinyl ether, N-vinylpyrrolidone, N-vinylcarbazole, and dimethyl fumarate; olefin monomers such as 1-hexene, limonene, norbornene, 1,3-butadiene, and isoprene; maleimide compounds; maleic anhydride; vinylidene monomers such as vinylene carbonate; vinylidene monomers such as vinylidene fluoride and vinylidene chloride; and the like.

The amount of monomer to be used depends on the design of the block copolymer to be produced. For example, the amount of monomer is 10 to 5000 moles, preferably 50 to 2000 moles, and more preferably 100 moles to 1500 moles, per mole of the macroinitiator (aliphatic polycarbonate of the present invention). When the amount of the monomer used is within this range, the physical properties of aliphatic polycarbonate and those of the second polymer can both be preferably exhibited.

The solvent used for the radical polymerization is not particularly limited. Examples include aliphatic hydrocarbon solvents such as pentane, hexane, octane, and cyclohexane; aromatic hydrocarbons such as benzene, toluene, and xylene; ether solvents such as dimethoxyethane, tetrahydrofuran, 2-methyltetrahydrofuran, 1,4-dioxane, 1,3-dioxolane, and anisole; ester solvents such as ethyl acetate, n-propyl acetate, isopropyl acetate; amide solvents such as N,N-dimethylformamide and N,N-dimethylacetamide; carbonate solvents such as dimethyl carbonate, ethyl methyl carbonate, diethyl carbonate, and propylene carbonate; and the like. When a liquid monomer is used at the reaction temperature, the use of a solvent is unnecessary.

The amount of solvent to be used is, for example, from 0 to 10000 moles, preferably from 10 to 5000 moles, more preferably from 30 to 2000 moles, and particularly preferably from 100 to 1000 moles, per mole of the macroinitiator. When the amount of solvent is within this range, the living radical polymerization reaction can be performed at a sufficient reaction rate.

The reaction temperature depends on the method of living radical polymerization used. For example, the reaction temperature is 0 to 200°C, preferably 30 to 150°C, and more preferably 50 to 120°C.

After the living radical polymerization, one or both ends of the obtained polymer have a substituent that serves as an initiating group for living radical polymerization. Accordingly, another monomer can be further subjected to living radical polymerization.

The terminal group(s) can be further converted to another substituent by performing a post-treatment after the living radical polymerization.

The post-treatment depends on the method of living radical polymerization. Examples of post-treatments include heating, decomposition by light irradiation, hydrolysis, hydrogenolysis, a coupling reaction with free radicals, reduction with a thiol compound, and the like.

### Examples

The present invention is described below more specifically with reference to Examples. However, the present invention is not limited to these Examples.

The physical properties of aliphatic polycarbonates and the like in the Example were measured by the following method.

### Number Average Molecular Weight (Mn) of Aliphatic Polycarbonate and Block Copolymer

The number average molecular weight of aliphatic polycarbonate resin was measured by preparing a 0.5 mass% solution of aliphatic polycarbonate or a block copolymer in chloroform, and using high-performance liquid chromatography (HPLC). After the measurement, the measurement value was compared with the value of polystyrene whose number average molecular weight measured under the same conditions was known. The measurement conditions are as follows:
Column: GPC column (Shodex K-804L; trade name of Showa Denko
K.K.)
Column temperature: 40°C
Eluate: chloroform
Flow rate: 1.0 mL/min

### Production of Cobalt Complex Catalyst

### Production Example 1a

91 mg (0.15 mmol) of (R,R)-N,N'-bis(3,5-di-tert-butylsalicylidene)-1,2-cyclohexanediaminocobalt (II) (purchased from Aldrich), 25 mg (0.15 mmol) of 2-bromo-2-methylpropionic acid, and 10 mL of dichloromethane were placed in a 50-mL flask equipped with a stirrer and a gas inlet tube. While introducing air, the resulting mixture was stirred for 18 hours to allow a reaction to proceed. After the volatile components were distilled off under reduced pressure, the residue was dried under reduced pressure to obtain a cobalt complex (Formula 7-1) as a brown solid (yield: 115 mg, yield: 99.8%).
¹H-NMR (DMSO-d₆) δ = 7.81 (s, 2H), 7.47 (d, 2H), 7.44 (d, 2H), 3.60 (m, 2H), 3.07 (m, 2H), 2.00 (m, 2H), 1.94 (s, 6H), 1.90 (m, 2H), 1.74 (s, 18H), 1.59 (m, 2H), 1.30 (s, 18H) ppm.

### Production Example 1b

The same procedure as in Example 1a was performed, except that 2-chloropropionic acid was used as carboxylic acid. A cobalt complex (Formula 7-2) was thus obtained (107 mg, yield: 99.9%).
¹H-NMR (DMSO-d₆) δ = 7.81 (s, 2H), 7.47 (d, 2H), 7.44 (d, 2H), 4.46 (t, 1H), 3.60 (m, 2H), 3.07 (m, 2H), 1.90 (m, 2H), 2.00 (m, 2H), 1.74 (s, 18H), 1.70 (d, 3H), 1.59 (m, 2H), 1.30 (s, 18H) ppm.

### Production Example 1c

The same procedure as in Example 1a was performed, except that 2-bromopropionic acid was used as carboxylic acid. A cobalt complex (Formula 7-3) was thus obtained (113 mg, yield: 99.7%) .
¹H-NMR(DMSO-d₆) δ = 7.81 (s, 2H), 7.47 (d, 2H), 1.81 (d, 3H), 7.44 (d, 2H), 4.84 (q, 1H), 3.60 (m, 2H), 3.07 (m, 2H), 2.00 (m, 2H), 1.90 (m, 2H), 1.72 (s, 18H), 1.59 (m, 2H), 1.30 (s, 18H) ppm.

### Production Example 1d

The same procedure as in Example 1a was performed, except that chloroacetic acid was used as carboxylic acid. A cobalt complex (Formula 7-4) was thus obtained (104 mg, yield: 99.8%)
¹H-NMR (DMSO-d₆) δ = 7.81 (s, 2H), 7.47 (d, 2H), 7.44 (d, 2H), 4.14 (s, 2H), 3.60 (m, 2H), 3.07 (m, 2H), 2.00 (m, 2H), 1.90 (m, 2H), 1.74 (s, 18H), 1.59 (m, 2H), 1.30 (s, 18H) ppm.

### Production Example 1e

The same procedure as in Example 1a was performed, except that 2-(thiobenzoylthio)acetic acid was used as carboxylic acid. A cobalt complex (Formula 7-5) was thus obtained (103 mg, yield: 99.5%).
¹H-NMR (DMSO-d₆) δ = 8.00 (m, 2H), 7.81 (s, 2H), 7.52 (m, 1H), 7.47 (d, 2H), 7.44 (d, 2H), 7.39 (m, 2H), 4.28 (s, 2H), 3.60 (m, 2H), 3.07 (m, 2H), 2.00 (m, 2H), 1.90 (m, 2H), 1.74 (s, 18H), 1.59 (m, 2H), 1.31 (s, 18H) ppm.

### Synthesis of Aliphatic Polycarbonate

### Example 1a

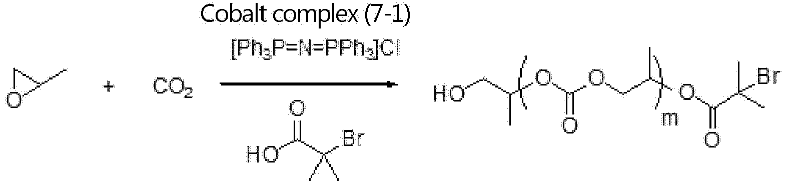

After 11 mg (0.014 mmol) of the cobalt complex obtained in Production Example 1a, 8.2 mg (0.014 mmol) of bis(triphenylphosphoranylidene)ammonium chloride (PPNCl), and 36 mg (0.22 mmol) of 2-bromo-2-methylpropionic acid as a chain transfer agent were placed in a 50-mL autoclave, the atmosphere in the autoclave was purged with argon. Further, 1.6 g (28 mmol) of propylene oxide was placed in the autoclave, and carbon dioxide was introduced until the internal pressure of the autoclave reached 1.5 MPa, followed by stirring at 25°C for 5 hours. After completion of the reaction, the autoclave was depressurized, and 1.0 g of methanolic hydrochloric acid was added to the contents to stop the reaction. Five grams of dichloromethane was added to dissolve the contents. This solution was added dropwise to 100 g of methanol to precipitate a solid. The obtained solid was filtered and dried under reduced pressure to obtain 1.81 g of an aliphatic polycarbonate (yield: 63%). The obtained aliphatic polycarbonate had a Mn of 5600 (m = 55) and a Mw/Mn of 1.1. The structure of the aliphatic polycarbonate was identified using ¹H-NMR.
¹H-NMR(CDCl₃) δ = 5.05-4.95 (m, 1H), 4.32-4.09 (m, 2H), 1.93 (s, 6H), 1.35-1.32 (m, 3H) ppm.

### Example 1b

The same procedure as in Example 1a was performed, except that the complex obtained in Production Example 1b was used as a complex, and 2-chloropropionic acid was used as a chain transfer agent; 1.27 g of an aliphatic polycarbonate was thus obtained (yield 44.4%). The obtained aliphatic polycarbonate had a Mn of 5300 (m = 52) and a Mw/Mn of 1.1. The structure of the aliphatic polycarbonate was identified by ¹H-NMR. ¹H-NMR (CDCl₃) δ = 5.06-4.96 (m, 1H), 4.44 (q, 1H), 4.32-4.09 (m, 2H), 1.70 (d, 3H), 1.35-1.32 (m, 1H) ppm.

### Example 1c

The same procedure as in Example 1a was performed, except that the complex obtained in Production Example 1c was used as a complex, and 2-bromopropionic acid was used as a chain transfer agent; 0.46 g of an aliphatic polycarbonate was thus obtained (yield: 16%). The obtained aliphatic polycarbonate had a Mn of 3000 (m = 29) and a Mw/Mn of 1.1. The structure of the aliphatic polycarbonate was identified by ¹H-NMR. ¹H-NMR (CDCl₃) δ = 5.06-4.96 (m, 1H), 4.86 (q, 1H), 4.32-4.09 (m, 2H), 1.83 (d, 3H), 1.35-1.32 (m, 3H) ppm.

### Example 1d

The same procedure as in Example 1a was performed, except that the complex obtained in Production Example 1d was used as a complex, and 2-chloroacetic acid was used as a chain transfer agent; 1.40 g of an aliphatic polycarbonate was thus obtained (yield: 49.0%). The obtained aliphatic polycarbonate had a Mn of 5800 (m = 57) and a Mw/Mn of 1.1. The structure of the aliphatic polycarbonate was identified by ¹H-NMR. ¹H-NMR (CDCl₃) δ = 5.06-4.96 (m, 1H), 4.32-4.09 (m, 2H), 1.35-1.32 (m, 3H).

### Example 1e

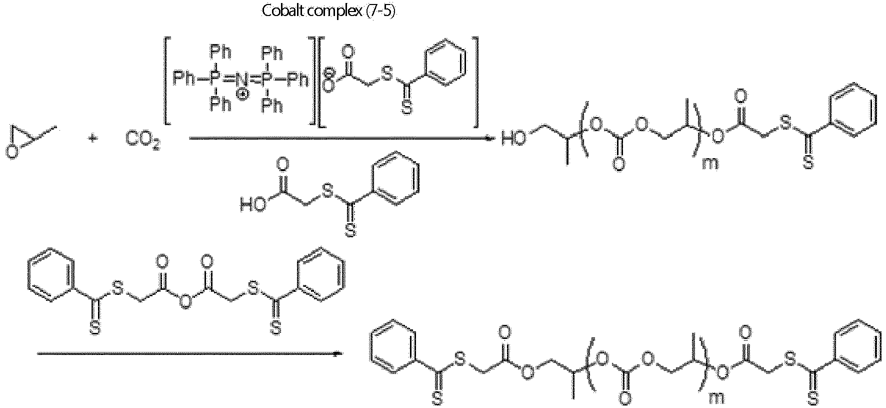

After 11 mg (0.014 mmol) of the cobalt complex obtained in Production Example 1e, 10 mg (0.014 mmol) of bis(triphenylphosphoranylidene)ammonium 2-(thiobenzoylthio)acetate, and 89 mg (0.42 mmol) of 2-(thiobenzoylthio)acetic acid as a chain transfer agent were placed in a 50-mL autoclave, the internal atmosphere of the autoclave was purged with argon. Further, 3.3 g (28 mmol) of propylene oxide was placed in the autoclave, and carbon dioxide was introduced until the internal pressure of the autoclave reached 1.5 MPa, followed by stirring at 25°C for 30 hours. After completion of the reaction, the autoclave was depressurized, and the contents were dissolved in 20 g of dichloromethane and transferred to a 50-mL eggplant-shaped flask. After the volatile components were distilled off under reduced pressure, 10 g of dichloromethane was added to dissolve the contents. Further, 0.15 g (0.35 mmol) of 2-(thiobenzoylthio)acetic anhydride was added to allow a reaction to proceed at 40°C for 2 hours. The reaction solution was added dropwise to 200 g of methanol to precipitate a solid. The obtained solid was filtered and dried under reduced pressure to obtain 3.0 g of an aliphatic polycarbonate (yield: 53%). The aliphatic polycarbonate had a Mn of 9100 (m = 89), and a Mw/Mn of 1.1. The structure of the aliphatic polycarbonate was identified by ¹H-NMR.
¹H-NMR (CDCl₃) δ = 8.03 (m, 2H), 7.52 (m, 1H), 7.39 (m, 2H), 5.06-4.96 (m, 1H), 4.32-4.09 (m, 2H), 1.35-1.32 (m, 3H) ppm.

### Synthesis of Block Copolymer

### Example 2a

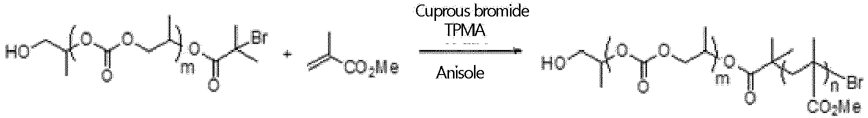

After 0.14 g of the aliphatic polycarbonate obtained in Example 1a (terminal functional group: 0.025 mmol), 2.6 mg (0.0089 mmol) of cuprous bromide, and 1.3 mg (0.0095 mmol) of tris(2-pyridylmethyl)amine (TPMA) were placed in a 30-mL Schlenk flask containing a magnetic stirring bar, the internal atmosphere of the container was purged with argon. Further, 0.10 g of anisole and 2.0 g (20 mmol) of methyl methacrylate were placed in the container, and the resulting mixture was subjected to freeze-pump-thaw degassing. The internal atmosphere of the container was then purged again with argon, and stirring was performed at 70°C for 3 hours. After air was blown into the contents to stop the reaction, 15 g of dichloromethane was added to dissolve the contents. The obtained organic layer was washed twice with 10 mL of 1N hydrochloric acid and once with 10 mL of ion exchange water, and concentrated under reduced pressure. The residue was added dropwise to 100 g of methanol to precipitate a solid. The obtained solid was collected by filtration, and dried under reduced pressure to obtain 0.45 g of a colorless polypropylene carbonate-polymethyl methacrylate block copolymer (yield: 15%). The obtained block copolymer had a Mn of 21000 and a Mw/Mn of 1.1. The structure of the block copolymer was identified by ¹H-NMR.
¹H-NMR (CDCl₃) δ = 5.05-4.96 (m, 1H), 4.31-4.09 (m, 2H), 3.60 (br, 3H), 1.99-1.77 (m, 2H), 1.35-1.32 (m, 3H), 1.02-0.83 (m, 3H) ppm.

Fig. 1 shows the chromatogram (GPC curve) of the obtained block copolymer (Example 2a) and the raw material aliphatic polycarbonate (Example 1a) measured by HPLC under the above conditions.

### Example 2b

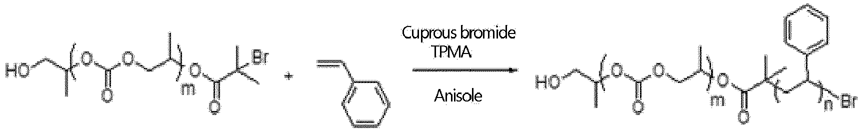

The same procedure as in Example 1a was performed, except that 2.6 g (25 mmol) of styrene was used in place of MMA; 1.0 g of a polypropylene carbonate-polystyrene block copolymer was thus obtained (yield 33%). The obtained block copolymer had a Mn of 29000 and a Mw/Mn of 1.1. The structure of the block copolymer was identified by ¹H-NMR.
¹H-NMR (CDCl₃) δ = 7.15-6.30 (m, 5H), 5.05-4.96 (m, 1H), 4.31-4.09 (m, 2H), 2.10-1.40 (br, 3H), 1.35-1.32 (m, 3H) ppm.

### Example 2c

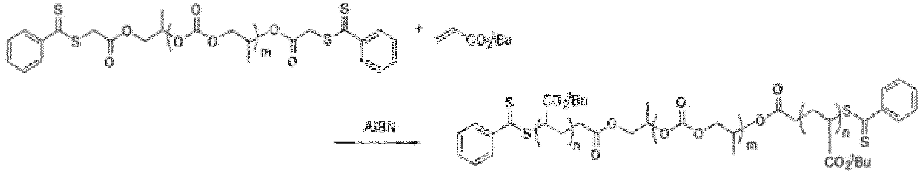

After 0.45 g (terminal functional group: 0.050 mmol) of the aliphatic polycarbonate obtained in Example 1e and 4.1 mg (0.025 mmol) of 2,2'-azobis(isobutyronitrile) (AIBN) were placed in a 30-mL Schlenk flask containing a magnetic stirring bar, the internal atmosphere of the container was purged with argon. Further, 6.4 g (50 mmol) of tert-butyl acrylate (tBA) was placed in the container, and the resulting mixture was subjected to freeze-pump-thaw degassing. The internal atmosphere of the reaction container was then purged with argon again, and stirring was performed at 80°C for 10 hours. After the reaction, 15 g of dichloromethane was added to dissolve the contents. The obtained organic layer was washed twice with 10 mL of 1N hydrochloric acid and once with 10 mL of ion exchange water, and concentrated under reduced pressure. The residue was added dropwise to 100 g of methanol to precipitate a solid. The obtained solid was collected by filtration, and dried under reduced pressure to obtain 2.60 g of a colorless triblock copolymer of polytert-butyl acrylate, polypropylene carbonate, and polytert-butyl acylate (yield: 33%). The obtained triblock copolymer had a Mn of 50000 and a Mw/Mn of 1.3. The structure of the triblock copolymer was identified by ¹H-NMR.
¹H-NMR (CDCl₃) δ = 5.05-4.96 (m, 1H), 4.31-4.09 (m, 2H), 3.65 (br, 3H), 2.26 (m, 1H), 1.85-1.57 (m, 2H), 1.46 (s, 9H), 1.35-1.32 (m, 3H) ppm.

Table 1 summarizes the information on aliphatic polycarbonates and block copolymers obtained in the Examples.

**Table 1**

| | A | B | Mn (m) | Mw/Mn | | Monomer | Mn (n) | Mw/Mn |
|---|---|---|---|---|---|---|---|---|
| Example 1a | -OH | 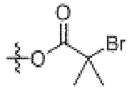 | 5600 (55) | 1.1 | Example 2a | 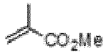 | 21000 (154) | 1.1 |
| | | | | 1.1 | Example 2b | 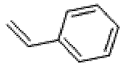 | 29000 (224) | 1.1 |
| Example 1b | -OH | 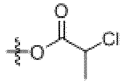 | 5300 (52) | 1.1 | - | - | - | - |
| Example 1c | -OH | 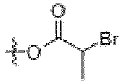 | 3000 (29) | 1.1 | - | - | - | - |
| Example 1d | -OH | 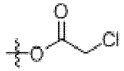 | 5800 (57) | 1.1 | - | - | - | - |
| Example 1e | 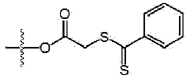 | 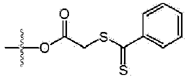 | 9100 (89) | 1.1 | Example 2c | 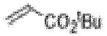 | 50000 (159) | 1.3 |

The ¹H-NMR analysis of the aliphatic polycarbonates obtained in Examples 1a to 1e shows that terminal groups of the aliphatic polycarbonates had a substituent that serves as an initiating group for living polymerization. Fig. 1 shows that the GPC curve shifts to a high molecular weight region while maintaining the peak shape. The results thus show that in Example 2a, living radical polymerization of MMA proceeded using the aliphatic polycarbonate synthesized in Example 1a as a macroinitiator, and that a block copolymer was thus synthesized.

Further, in Examples 2a and 2b, block copolymers were synthesized by using the atom transfer radical polymerization method; and in Example 2c, a block copolymer was synthesized by using the reversible addition-fragmentation chain transfer polymerization method. These show that applicable living radical polymerization methods are not limited to specific methods.

### Industrial Applicability

The aliphatic polycarbonate of the present invention can be used as a macroinitiator for living radical polymerization. Therefore, block copolymers applicable in various fields, such as dispersants, compatibilizers, surfactants, and self-assembly lithography, can be produced.

## Claims

1. A living radical polymerization initiator comprising an aliphatic polycarbonate.

2. The living radical polymerization initiator according to claim 1, wherein the aliphatic polycarbonate is represented by formula (1): 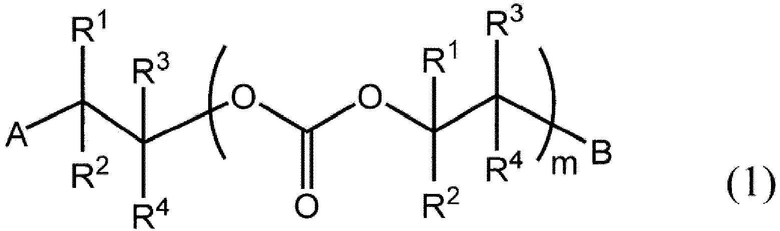
wherein R¹, R², R³, and R⁴ are identical or different, and each represents a hydrogen atom, a substituted or unsubstituted alkyl group having 1 to 15 carbon atoms, or a substituted or unsubstituted aryl group having 6 to 20 carbon atoms;
A and B are identical or different, and each represents a substituent that serves as an initiating group for living radical polymerization, a hydroxy group, an alkoxy group, an acyloxy group, or a carboxy group, provided that at least one of A and B is a substituent that serves as an initiating group for living radical polymerization; and m is an integer of 10 to 2500.

3. The living radical polymerization initiator according to claim 1 or 2, wherein the substituent that serves as an initiating group for living radical polymerization is a halogen-containing group, a dithioester group, a dithiocarbonate group, a dithiocarbamate group, a trithiocarbonate group, an aminooxy group, or an organotellurium group.

4. The living radical polymerization initiator according to any one of claims 1 to 3, wherein the substituent that serves as an initiating group for living radical polymerization is a group represented by formula (2): 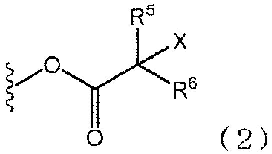
wherein R⁵ and R⁶ are identical or different, and each represents a hydrogen atom, an alkyl group having 1 to 10 carbon atoms, or an aryl group having 6 to 20 carbon atoms; and
X represents a chlorine atom, a bromine atom, or an iodine atom;
a group represented by formula (3): 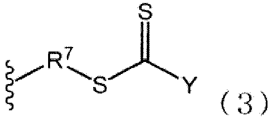
wherein R⁷ represents an alkylene group having 1 to 10 carbon atoms, an arylene group having 6 to 20 atoms, or an ester group having 1 to 15 carbon atoms; and Y represents an alkyl group having 1 to 10 carbon atoms, an aryl group having 6 to 20 carbon atoms, an alkoxy group having 1 to 10 carbon atoms, an alkylamino group having 1 to 10 carbon atoms, or a thioalkoxy group having 1 to 10 carbon atoms;
a group represented by formula (4): 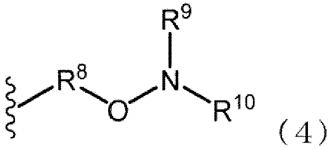
wherein R⁸ represents an alkylene group having 1 to 10 carbon atoms, an arylene group having 6 to 20 carbon atoms, or an ester group having 1 to 15 carbon atoms;
R⁹ and R¹⁰ are identical or different, and each represents a hydrogen atom, an alkyl group having 1 to 10 carbon atoms, or an aryl group having 6 to 20 carbon atoms; or R⁹ and R¹⁰, taken together with the nitrogen atom to which they are bonded, may be bonded to each other to form a substituted or unsubstituted 4- to 10-membered aliphatic nitrogen heterocyclic ring, or
a group represented by formula (5): 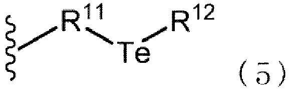
wherein R¹¹ represents an alkylene group having 1 to 10 carbon atoms, an arylene group having 6 to 20 carbon atoms, or an ester group having 1 to 15 carbon atoms; and R¹² may be a substituted or unsubstituted alkyl group having 1 to 10 carbon atoms, or a substituted or unsubstituted aryl group having 6 to 20 carbon atoms.

5. The living radical polymerization initiator according to any one of claims 1 to 4, wherein the aliphatic polycarbonate has a number average molecular weight of 1000 or more, and 100000 or less.

6. A method for producing a block copolymer, comprising performing a polymerization reaction using the living radical polymerization initiator of any one of claims 1 to 5.

7. An aliphatic polycarbonate represented by formula (1): 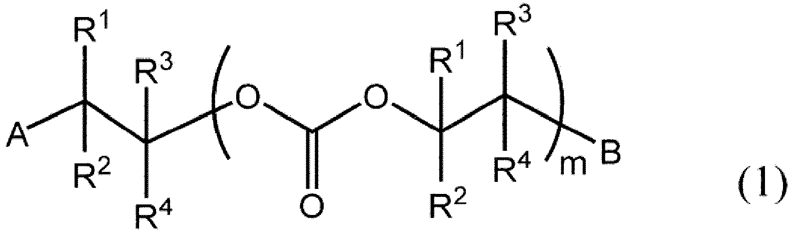
wherein R¹, R², R³, and R⁴ are identical or different, and each represents an hydrogen atom, an alkyl group having 1 to 15 carbon atoms, or an aryl group having 6 to 20 carbon atoms;
A and B are identical or different, and each represents a substituent that serves as an initiating group for living radical polymerization, a hydroxy group, an alkoxy group, an acyloxy group, or a carboxy group, provided that at least one of A and B is a substituent that serves as an initiating group for living radical polymerization; and m is an integer of 10 to 2500.

8. The aliphatic polycarbonate according to claim 7, wherein the substituent that serves as an initiating group for living radical polymerization is a halogen-containing group, a dithioester group, a dithiocarbonate group, a dithiocarbamate group, a trithiocarbonate group, an aminooxy group, or an organotellurium group.

9. The aliphatic polycarbonate according to claim 7 or 8, wherein the substituent that serves as an initiating group for living radical polymerization is
a group represented by formula (2): 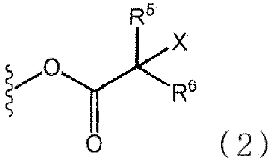 wherein R⁵ and R⁶ are identical or different, and each represents a hydrogen atom, an alkyl group having 1 to 10 carbon atoms, or an aryl group having 6 to 20 carbon atoms; and X represents a chlorine atom, a bromine atom, or an iodine atom;
a group represented by formula (3): 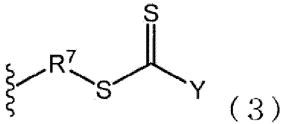 wherein R⁷ represents an alkylene group having 1 to 10 carbon atoms, an arylene group having 6 to 20 carbon atoms, or an ester group having 1 to 15 carbon atoms; and Y is an alkyl group having 1 to 10 carbon atoms, an aryl group having 6 to 20 carbon atoms, an alkoxy group having 1 to 10 carbon atoms, an alkylamino group having 1 to 10 carbon atoms, or a thioalkoxy group having 1 to 10 carbon atoms;
a group represented by formula (4): 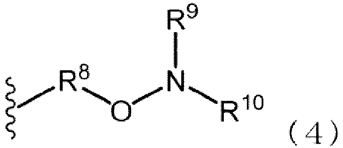
wherein R⁸ represents an alkylene group having 1 to 10 carbon atoms, an arylene group having 6 to 20 carbon atoms, or an ester group having 1 to 15 carbon atoms; and
R⁹ and R¹⁰ are identical or different, and each represents a hydrogen atom, an alkyl group having 1 to 10 carbon atoms, or an aryl group having 6 to 20 carbon atoms; or R⁹ and R¹⁰, taken together with the nitrogen atom to which they are bonded, may be bonded to each other to form a substituted or unsubstituted 4- to 10-membered aliphatic nitrogen heterocyclic ring, or
a group represented by formula (5): 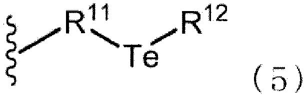
wherein R¹¹ represents an alkylene group having 1 to 10 carbon atoms, an arylene group having 6 to 20 carbon atoms, or an ester group having 1 to 15 carbon atoms; and
R¹² represents a substituted or unsubstituted alkyl group having 1 to 10 carbon atoms, or a substituted or unsubstituted aryl group having 6 to 20 carbon atoms.

10. The aliphatic polycarbonate according to any one of claims 7 to 9, which has a number average molecular weight of 1000 or more, and 100000 or less.
